# EUROPEAN PATENT SPECIFICATION

(11) **EP 4 532 095 B1**
(45) Date of publication and mention of the grant of the patent: **28.01.2026**
(21) Application number: 23729414.5
(22) Date of filing: 31.05.2023
(51) Int. Cl.: B01J 8/02, B01D 53/86, B01J 8/04, C01B 21/46, B01J 15/00, B01J 19/32, B01J 19/24, B01J 8/00, B01J 8/06

(54) **CATALYST SUPPORT SYSTEM FOR AMMONIA OXIDATION BURNERS**
KATALYSATORTRÄGERSYSTEM FÜR AMMONIAKOXIDATIONSBRENNER
SYSTÈME DE SUPPORT DE CATALYSEUR POUR BRÛLEURS D'OXYDATION D'AMMONIAC

(30) Priority: 02.06.2022 EP 22176973
(43) Date of publication of application: 09.04.2025
(73) Proprietor: CASALE SA, 6900 Lugano (CH)
(72) Inventor: PANZERI, Nicola, 6932 Breganzona (CH); REDAELLI, Luca, 22020 Drezzo (CO) (IT); PEDON, Flavio, 21034 Cocquio Trevisago (VA) (IT)
(74) Representative: M. Zardi & Co S.A.
(86) International application number: PCT/EP2023/064523
(87) International publication number: WO 2023/232853

(56) References cited:
- WO-A1-00/40329
- WO-A1-2004/005187
- US-A1- 2018 305 210
- US-A1- 2018 369 780
- US-B2- 9 725 320

## Description

### Field of application

The invention is in the field of catalyst support systems for ammonia oxidation burners.

### Prior art

In the process for the production of nitric acid, ammonia and an oxygen containing-gas, such as air or pure oxygen, are catalytically reacted in a burner at high temperature over a catalytic gauze. Typically, the catalytic gauze is made of noble metals such as Pt/Rh.

The product of the oxidation of ammonia is a gas mixture that contains nitrogen monoxide NO and nitrogen dioxides NO₂ as major components and dinitrogen oxide (also termed nitrous oxide) N₂O in minor quantity. The ammonia oxidation gas is cooled in one or more heat exchangers to push the conversion of NO into NO₂ and finally absorbed in water, in a suitable absorption column, to yield nitric acid.

Overall, the process for the synthesis of nitric acid involves demanding conditions in terms of temperature and its gradient, therefore the equipment is exposed to a severe stress. The ammonia burner is particularly stressed because it must withstand the high temperature developed by the oxidation of ammonia which can go beyond 900 °C, for example up to 920 °C.

The dinitrogen oxide N₂O is a known pollutant and does not participate in the synthesis of nitric acid. Therefore, the N₂O contained in the ammonia gas can be removed directly in the ammonia burner by flowing the gas mixture through a catalyst suitable to decompose N₂O into nitrogen and oxygen. A catalyst adapted to remove N₂O before the absorption step is termed a N₂O secondary abatement catalyst.

Accordingly, a known design of ammonia burner includes a basket arranged below the ammonia oxidation catalytic gauze and suitable to contain said N₂O secondary abatement catalyst. Said basket may also contain an inert material to uniformly distribute the gas.

The ammonia burner typically includes a load-bearing structure that rests on the vessel of the ammonia burner and includes a metallic ring for supporting the catalyst gauze and a carrier plate for supporting said basket.

The basket may be realized in a single piece or may include beam-like rectangular parts supported on said carrier plate at both ends. The basket has a gas-permeable floor surface for supporting the catalyst or inert material, normally said surface is in the form of a grid or net.

The above design of the basket however has revealed some drawbacks, particularly under the severe thermal stress caused by the hot ammonia oxidation gas. The metallic ring and the carrier plate are subject to a considerable thermal elongation and must be able to withstand the weight and the pressure drop of the catalytic gauze and of the basket which contains the abatement catalyst.

Particularly, a drawback of a single-piece basket is that the thermal elongation in the circumferential direction can only be compensated at the outer edge of the basket. The known subdivision of the basket into relatively large sections, supported at both ends on the ring, does not solve this issue.

The different thermal elongation of parts connected to each other may induce deformation or failure.

In practice, it has been observed that cracks can occur in the metallic ring that supports the gauze and deformations and/or bulges can occur in the basket. A displacement between the components of the supporting structure, induced by thermal stress, may break the net of the basket and/or lead to formation of waves in the floor surface. The negative consequences may include formation of gas bypass routes and uneven distribution of the catalyst or inert material. Certain zones of the catalyst layer may receive less gas or remain substantially inactive.

Furthermore, when the basket containing the N₂O secondary abatement catalyst is fixed with joints that are welded to the carrier plate the high temperature cycles developed by the ammonia oxidation reaction may result in the displacement of the catalyst from a peripheral edge of the basket to a central area of the latter and in some instance rupture of the basket may occur potentially resulting in the discharge of the catalyst outside of the basket.

Accordingly, there is a need for a catalyst support system for ammonia oxidation burners that is less susceptible to the above-mentioned structural integrity issues.

US 2018/305210 A1, US 2018/369780 A1, and US 9 725 320 B2 disclose catalyst support systems for ammonia oxidation burners.

### Summary of the invention

The invention aims to overcome the above drawbacks of the prior art. The present invention aims to provide a novel catalyst support system which can better withstand the thermal stress in the ammonia burner. The present invention addresses the problem of how to improve the design of the basket for supporting the N2O secondary catalyst and/or inert material, downstream the ammonia oxidation catalyst gauze, in order to avoid or reduce the above-mentioned drawbacks.

The aims of the invention include, among others, to avoid catalyst bypass, to allow the accommodation of thermal elongation, to exploit the secondary catalyst in a better way and reduce the inactive catalyst, to simplify the installation procedure.

The aims are reached with a catalytic support system according to claim 1. The basket for retaining N2O secondary catalyst and/or inert material, has a modular structure, wherein each module includes a gas-permeable floor and a supporting frame, each module is connected to adjacent modules by connections adapted to allow a limited displacement between modules, outer modules forming the periphery of the basket are connected to said supporting ring.

In a highly preferred embodiment, the modules include an inner portion located at the centre of the basket and a plurality of modules arranged to form one or more concentric annular ranks.

The above modular construction of the basket has numerous advantages.

The main advantage is a much better adaptation to thermal elongation. The thermal elongation is distributed between modules, contrary to what happens in a single-piece basket. The arrangement of modules in multiple concentric annular sets is particularly effective in the accommodation of radial and circumferential elongation. The modular basket has an increased ability to follow the thermal elongation and adapt to the temperature profile in the ammonia oxidation reactor.

The outer modules are connected to the supporting ring preferably with a radial joint, that is a joint adapted to react to a radial stress, but leaving the modules free to perform a limited displacement relative to said ring in other directions. Accordingly, the outer modules can move together with the supporting ring to accommodate for the thermal elongation. The possible relative displacement between said outer modules and the adjoining modules is absorbed by the respective connections. A related advantage is reduction of N2O catalyst displacement and avoidance or reduction of bypass routes for the gas.

The connections between modules avoid uncontrolled displacement so that the modules are properly held in place; at the same time however they allow the accommodation of thermal elongation, so that the entire modular structure of basket can adapt to the thermal stress.

A further advantage is that the amount of catalyst used for the N₂O decomposition can be reduced being the gas flow distribution within the basket optimized. The provision of a radially rigid joint only in the outer portion of the basket allows to simplify the installation procedure of the basket over the supporting ring.

Finally, the applicant has also found that the integration of the catalyst support system of the invention in an ammonia burner is highly effective at avoiding the occurrence of excessive thermal stresses thus an extension of the operating life of the ammonia burner is expected.

### Description of the invention

The invention discloses a catalyst support system for an ammonia oxidation burner, comprising:
a load-bearing structure comprising a first supporting ring to support a catalyst gauze for the oxidation of ammonia and a second supporting ring located below said first ring according to a vertical direction;
a basket which is connected to said second supporting ring and is adapted to contain an inert and/or a catalyst for removing N₂O from a gaseous effluent of said catalytic gauze;
wherein said basket has a modular structure including a plurality of modules, wherein each module includes a gas-permeable floor and a supporting frame, wherein each module is connected to adjacent modules by connections adapted to allow a limited displacement between modules to distribute thermal elongation between modules, wherein only outer modules forming the periphery of the basket are connected to said supporting ring.

The load-bearing structure includes generally a first supporting ring for the catalyst gauze and a second supporting ring for the modular basket. The second ring is below the first ring; therefore, the first ring may be termed upper ring and the second ring may be termed bottom ring. The second ring is below the first ring according to a vertical direction.

The structure may include an outer wall, an inner wall, an upper junction welded between said outer wall and said inner wall, said first ring being welded to said inner wall. The load-bearing structure may also include a sealing wall arranged to seal in a gas-tight manner a side surface between the first ring and the second ring. Said sealing wall may be welded to said first ring and second ring.

Overall, the modular basket has a gas-permeable floor surface, such as a grid or net, and a supporting structure. The purpose of the supporting structure is to support the gas-permeable surface. In the modular construction of the present invention, each module provides a portion of the gas-permeable floor and a portion of the related supporting structure.

Each of the outer basket modules may be connected to said second supporting ring with a radial joint configured to prevent a radial displacement of the module relative to said ring. Preferably, said radial joint permits a limited displacement of the module in a vertical direction. More preferably said radial joint also permits a small rotation of the module, relative to the supporting ring.

In a preferred execution, said radial joint comprises at least one fixation pin for each module, wherein said fixation pin is inserted with play in a hole of the frame of the basket module and is welded to the supporting ring.

In a very preferred embodiment, the system includes a set of cooling tubes located under the basket, to provide an additional supporting means for the basket modules. Preferably the only supporting means of the basket are the cooling tubes and the radial joints between the outer modules of the basket and said second ring. Accordingly, the weight of the basket modules is supported essentially by the underlying cooling tubes; the fixation of the outer modules to the supporting ring provides a radial support; the connections between modules hold the modules in place, thus maintaining the overall configuration of the basket, allowing at the same time relative movements to compensate for the thermal expansion. The outer modules may be supported partly by the underlying cooling tubes and partly by the second supporting ring.

In a preferred embodiment, the connections between modules include segments with an overall C-shaped or U-shaped cross section, said segments being disposed downward-facing over edge walls of adjacent modules, so that the C-shaped or U-shaped segment embraces the edge walls of the two modules. The segments are held in position by pins inserted through passages of said edge walls.

The components of said connections between modules are preferably gas-permeable, e.g. they are provided with suitable gas passages. Preferably, said gas passages are circular holes.

The modules are arranged to form a two-dimensional array. In a highly preferred embodiment, the modules are arranged in one or more concentric annular sets or ranks. For example, the outer modules form an outer annulus and further modules form one or more further annular sets. The modules may have a shape which approximate the shape of a sector of an annulus. A preferred shape is a substantially trapezoidal shape. A single inner module may form the centre of the basket.

In embodiments with modules arranged according to annular sets, said connections between modules preferably includes radial joints and circumferential joints, each being configured to allow a limited displacement between the connected modules.

Said upper ring is preferably a circular crown and may include notches periodically arranged along said circular crown and configured to compensate for thermal expansion. Preferably, the notches are aligned in radial directions originating from a point located in a center of the upper ring.

The system may include a first set of cooling tubes which are arranged between said outer wall and said inner wall.

The first set of cooling tubes can be attached to the outer wall or to inner wall of the catalyst support system and they can be used to protect the pressure vessel of the ammonia burner from overheating. The cooling tubes can be crossed by a cooling medium such as water or steam to remove heat from the load bearing structure and from the N₂O depleted gas exiting the basket.

The catalyst gauze may be kept in place over said upper ring by means of one or more counterweight(s).

In a preferred embodiment, said upper junction has a curved profile. The outer wall and the inner wall are preferably parallel so that the load-bearing structure acts as a radially elastic support.

The upper ring can be manufactured according to any know process or technique but preferably the upper ring is obtained by forging.

According to an interesting application the invention, a catalyst for N₂O abatement/decomposition and an inert material are filled inside the basket, the inert can be used to allow redistribution of flow inside the basket so to achieve a uniform flow distribution at the outlet of the basket.

Preferably the upper junction provided to connect the outer wall and the inner wall of the catalyst support system has a curved profile. The curved profile is particularly effectively in accommodating the thermal dilation of the catalyst support system at high temperature.

The ammonia burner may include a reactor vessel and a catalyst support system as provided herein. The reactor vessel may comprise a reactor wall, and the catalyst support system may be attached to the reactor wall by means of one or more welds.

Preferably, the outer wall and the inner wall of the catalyst support system are parallel so that the load-bearing structure acts as radially elastic support. With the term elastic support, the applicant indicates that the catalyst support system can be subjected to deformation in an elastic regime under thermal strain and when the thermal stresses are removed from the structure no plastic deformation remains in the structure.

The above-described catalyst support system may include a catalyst gauze for the oxidation of ammonia. Another aspect of the invention is an ammonia oxidation burner including a catalyst gauze for the oxidation of ammonia and a support system for said catalyst gauze according to the claims. Preferably the burner is a vertical burner and more preferably a vertical cylindrical burner.

### Description of the figures

Fig. 1 is a sectional view of a catalyst support system according to an embodiment of the invention.
Fig. 2 is a schematic representation of the basket of a catalyst support system according to an embodiment of the invention.
Fig. 3 is a schematic representation of a portion of the basket of the system of Fig. 1.
Fig. 4 is an exploded view of connections between the modules of the basket of Fig. 3.
Fig. 5 is a sectional view of a joint of the connections of Fig. 4.
Fig. 6 is a schematic representation of a portion of the upper ring of the system of Fig. 1.
Fig. 7 is a detail of a radial joint of Fig. 1.

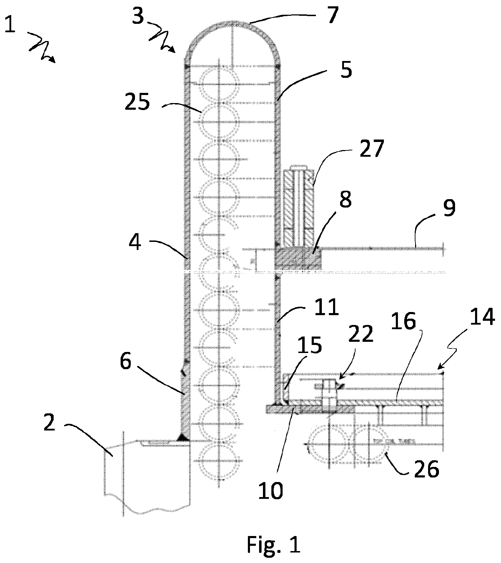

Fig. 1 illustrates a catalyst support system 1 for an ammonia oxidation burner 2.

The catalyst support system 1 comprises a load-bearing structure 3 which includes an outer wall 4 facing a wall of the ammonia burner 2, an inner wall 5 facing a reaction zone of the ammonia burner, a lower junction 6 and an upper junction 7.

The lower junction 6 is welded to the outer wall 4 and connects the load-bearing structure 3 with the ammonia burner 2. The upper junction 7 is welded between said outer wall 4 and said inner wall 5 and has a curved profile that allows accommodating thermal stresses. Particularly, the curved upper junction 7 forms a wave that provides some radial elasticity to the system.

The lower junction 6 is optional as, in certain embodiments, the outer wall 4 may be welded directly to the vessel of the burner 2.

The catalyst support system 1 further comprises an upper ring 8 and a bottom ring 10. The upper ring 8 is welded to said inner wall 5 and is configured to support a catalyst gauze 9 for the oxidation of ammonia. The bottom ring 10 is located below said upper ring 8.

The upper ring 8 and the bottom ring 10 are connected by means of a sealing wall 11 which is welded to a lower edge of the upper ring 8 and is also welded to an upper edge of the bottom ring 10.

The catalyst gauze 9 is kept in place over said upper ring 8 by means of suitable counterweights 27.

Said bottom ring 10 supports a basket 14. Said basket 14 may contain an inert and/or a catalyst for removing N₂O from a gaseous effluent of said catalyst gauze 9. When provided, the inert is used for flow distribution purposes, that is to get a uniform gaseous flow distribution at the outlet of the basket.

A first set of coiling coils 25 is arranged between the inner wall 5 and the outer wall 4 of the catalyst support system 1. The cooling coils 25 are crossed by a cooling medium such as water or steam to remove the heat developed by the oxidation reaction of ammonia from the catalyst support 1.

A second set of cooling coils 26 is provided underneath the basket 14. Said second set of cooling coils 26 removes heat from the gas effluent of the basket 14 and the heat removed can be used for steam generation or steam superheating purposes. The second set of cooling coils 26 may also provide a structural function; particularly it can be used for supporting at least partially the weight of the basket 14 so to increase the mechanical stability of the overall support system 1.

The basket 14 has a modular structure comprising a central module and a plurality of modules arranged to form one or more annular ranks, arranged concentrically. Each module has a gas-permeable floor 16 preferably in the form of a grate and a supporting frame 15 (Fig. 1). Each module in other words forms a portion of the supporting structure and of a gas-permeable floor of the whole basket 14.

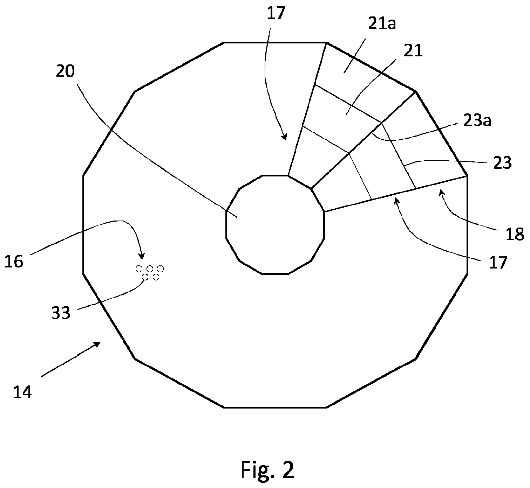

The basic design principle of the modular basket 14 is illustrated in Fig. 2. The basket 14 includes a central module 20 and modules 21, 21a arranged to form one or more annular ranks 17, 18. The outer modules 21a form an outer annular set 18, whereas modules 21 form one or more annular sets 17.

Each module is connected to adjacent modules along radial connection channels 23 and circumferential connection channels 23a. The term circumferential here denotes connections channels along lines which are perpendicular to a median radius of the module.

The central module 20 may be circular or polygonal. If polygonal, the central module 20 has preferably many sides, such as at least 10 or 12 sides, to approximate a circle. Each module 21 is preferably delimited by straight sides and has, preferably, a substantially trapezoidal shape to approximate the shape of a sector of annulus.

The shape and size of the modules may vary according to the position within the basket. For example, in the scheme of Fig. 2 the inner modules have a shape close to triangular, whereas the outer modules 21a are close to a rectangular shape.

Each module 21, 21a has a perforated floor, such as grid or net, with holes 33 so that each module provides a portion of the gas-permeable floor 16 of the basket 14.

The connection channels 23 and 23a are arranged to allow relative displacement between adjacent modules, thus acting as expansion joints to compensate for thermal expansion. Said connection channels 23 and 23a extend over boundary lines between modules next to each other. Said boundary lines are preferably straight lines.

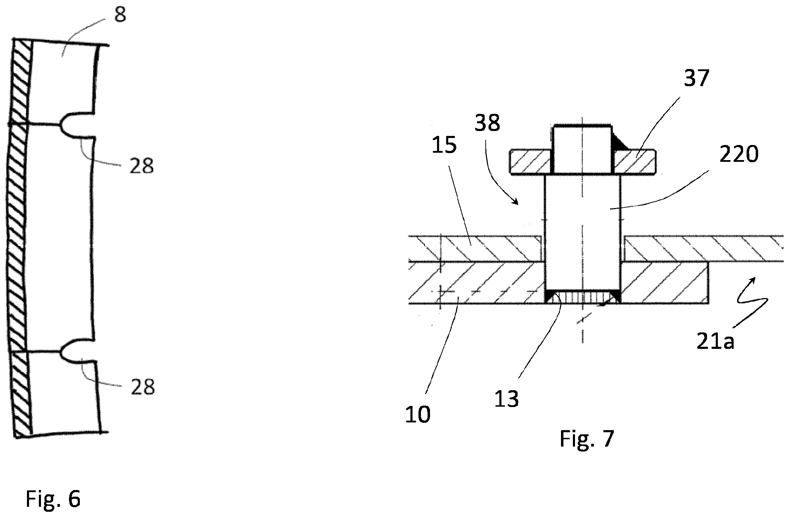

The modules 21a of the outermost rank 18 are connected to said bottom ring 10 with a radial joint 22, configured to prevent a radial displacement. A preferred embodiment of such joint 22 is illustrated in Fig. 7.

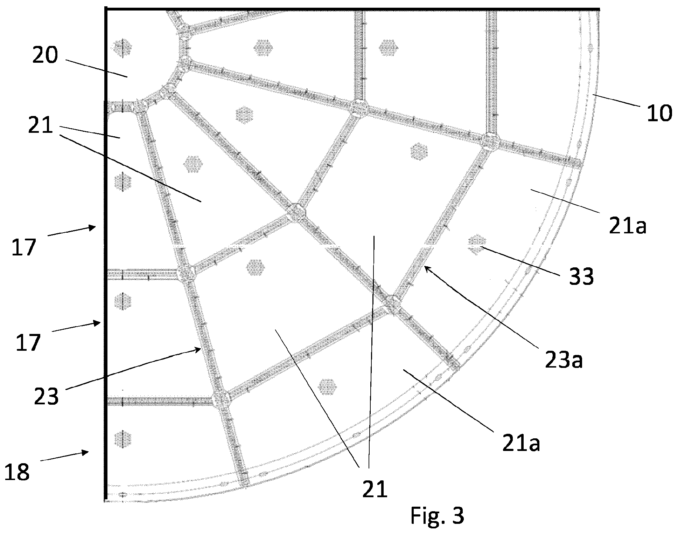

Fig. 3 illustrates a portion of basket 14 extending over 90° according to an embodiment wherein the modules 21, 21a form two concentric annular ranks 17 and an outer rank 18. The figure illustrates the radial connection channels 23 and circumferential connection channels 23a.

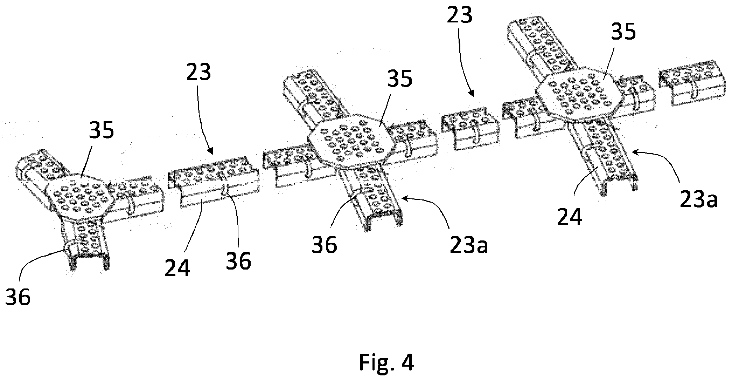

Fig. 4 shows a preferred embodiment of connection channels 23 and 23a. A connection channel 23 or 23a includes segments 24 with an overall C-shaped or U-shaped cross section, facing downward and disposed to embrace the side walls of two adjacent modules 21 or 21a. The segment 24 is held in place by one or more pins 36.

The connection channels further include cover pieces 35 located at intersection points of channels 23 and 23a, to avoid penetration of granules of catalyst in the interspaces between modules. Such penetration of catalyst granules is undesired because it may obstacle the freedom of displacement between modules to compensate for the thermal stress.

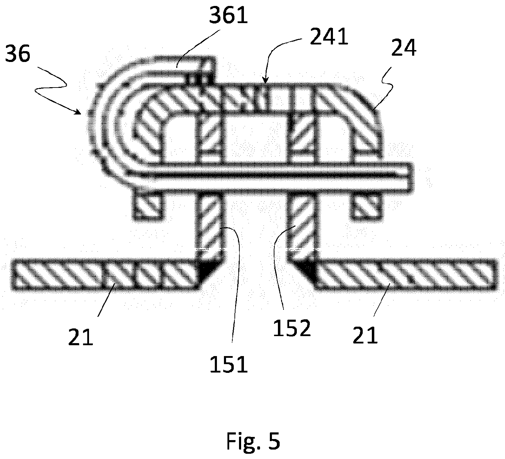

Fig. 5 illustrates in a greater detail the arrangement of the fixation pins 36. The pin 36 is inserted through holes of side walls 151, 152 of the modules 21, 21a and has a curved end 361 resting on the top surface 241 of the segment 24.

Fig. 6 illustrates a portion of the upper ring 8 in a preferred embodiment. The upper ring 8 comprises notches 28 that are periodically arranged along the ring 8. The notches 28 are configured to compensate for thermal expansion.

Fig. 7 shows a preferred embodiment of the radial joint 22 for connection between a frame 15 of an outer module 21a and the bottom ring 10. Said joint 22 includes a pin 220 that passes through a hole in the frame 15 and a hole in the bottom ring 10. The pin 220 is welded to the bottom ring 10 at a welding point 13. The pin 220 has a head 37 with a suitable shape to prevent the disengagement of the basket from the bottom ring 10.

A gap 38 between said head 37 of the pin 220 and the basket 14 allows a displacement of the module 21a, then of the entire basket 14, relative to the bottom ring 10 in axial direction (vertical direction). The provision of said gap 38 is particularly effective to accommodate for thermal expansion in the axial direction.

## Claims

1. A catalyst support system (1) for an ammonia oxidation burner (2), comprising:
a load-bearing structure (3) comprising a first supporting ring (8) to support a catalyst gauze (9) for the oxidation of ammonia and a second supporting ring (10) located below said first ring according to a vertical direction;
a basket (14) which is connected to said second supporting ring (10) and is adapted to contain an inert and/or a catalyst for removing N₂O from a gaseous effluent of said catalytic gauze (9);
wherein said basket (14) has a modular structure including a plurality of modules, wherein each module includes a gas-permeable floor (16) and a supporting frame (15), wherein each module is connected to adjacent modules by connections adapted to allow a limited displacement between modules to distribute thermal elongation between modules, wherein only outer modules (21a) forming the periphery of the basket are connected to said supporting ring.

2. System according to claim 1, wherein each of the outer modules (21a) of the basket is connected to said second ring (10) with a radial joint (22), said radial joint being configured to prevent a radial displacement of the module relative to said ring (10) and to allow a limited displacement of the module in a vertical direction and preferably also a rotation.

3. A system according to claim 1 or 2 including a set of cooling tubes located under the basket, wherein said modules of the basket rest on said cooling tubes and the only supporting means of the basket are the cooling tubes and the radial joints between the outer modules of the basket and said second ring (10).

4. A system according to any of the previous claims wherein said modules include an inner module (20) located at the centre of the basket and modules (21, 21a) arranged to form one or more concentric annular ranks (17, 18).

5. A system according to claim 4, wherein each module is connected to adjacent modules by radial joints (23) and circumferential joints (23a) wherein said radial joints and said circumferential joints are configured to allow a limited displacement between the connected modules.

6. A system according to any of the previous claims wherein the connections between the basket modules include segments (24) with an overall C-shaped or U-shaped cross section, said segments being disposed downward-facing over side walls of two adjacent basket modules, so that the segment embraces the edge walls of the modules, the segment being held in position by pins (36) inserted through holes of said side walls.

7. A system according to any of the previous claims, including a sealing wall (11) arranged to seal in a gas-tight manner a side surface between the first supporting ring (8) and the second supporting ring (10).

8. A system according to any of the previous claims wherein:
said load-bearing structure (3) includes an outer wall (4), an inner wall (5), an upper junction (7) welded between said outer wall (4) and said inner wall (5);
said first supporting ring (8) is welded to said inner wall (5).

9. A system according to claims 7 and 8, wherein said sealing wall (11) is welded to the first supporting ring (8) and to the second supporting ring (10).

10. A system according to claim 8 or 9 wherein said upper junction (7) has a curved profile and the outer wall (4) and the inner wall (5) are parallel, so that the load-bearing structure (3) acts as a radially elastic support.

11. A system (1) according to any of claims 8 to 10 comprising a set of cooling tubes (25) which are arranged between said outer wall (4) and said inner wall (5).

12. A system (1) according to any previous claims, wherein said catalyst gauze (9) is kept in place over said first supporting ring (8) by means of one or more counterweight(s) (27).

13. An ammonia oxidation burner including a catalyst gauze (9) for the oxidation of ammonia and a support system for said catalyst gauze according to any of the previous claims.

## Patentansprüche

1. Katalysatorträgersystem (1) für einen Ammoniakoxidationsbrenner (2), umfassend:
eine tragende Struktur (3) mit einem ersten Stützring (8) zum Tragen eines Katalysator-Gitters (9) für die Oxidation von Ammoniak und einem zweiten Stützring (10), der in vertikaler Richtung unterhalb des ersten Rings angeordnet ist;
einen Korb (14), der mit dem zweiten Stützring (10) verbunden ist und dazu eingerichtet ist, ein Inertmaterial und/oder einen Katalysator zur Entfernung von N₂O aus einem gasförmigen Abgas des Katalysator-Gitters (9) aufzunehmen;
wobei der Korb (14) eine modulare Struktur mit mehreren Modulen aufweist, wobei jedes Modul einen gasdurchlässigen Boden (16) und einen Stützrahmen (15) umfasst, wobei jedes Modul mit benachbarten Modulen durch Verbindungen verbunden ist, welche Verbindungen so eingerichtet sind, dass sie eine begrenzte Verschiebung zwischen den Modulen ermöglichen, um die thermische Ausdehnung zwischen den Modulen zu verteilen, wobei nur die äußeren Module (21a), die den Umfang des Korbs bilden, mit dem Stützring verbunden sind.

2. System nach Anspruch 1, wobei jedes der äußeren Module (21a) des Korbs mit dem zweiten Ring (10) durch eine radiale Verbindung (22) verbunden ist, wobei die radiale Verbindung so konfiguriert ist, dass sie eine radiale Verschiebung des Moduls relativ zu dem Ring (10) verhindert und eine begrenzte Verschiebung des Moduls in vertikaler Richtung und vorzugsweise auch eine Drehung ermöglicht.

3. System nach Anspruch 1 oder 2, das einen Satz von Kühlrohren umfasst, die sich unter dem Korb befinden, wobei die Module des Korbs auf den Kühlrohren aufliegen und die einzigen Stützmittel des Korbs die Kühlrohre und die radialen Verbindungen zwischen den Außenmodulen des Korbs und dem zweiten Ring (10) sind.

4. System nach einem der vorhergehenden Ansprüche, wobei die Module ein inneres Modul (20), das sich in der Mitte des Korbs befindet, und Module (21, 21a), die so angeordnet sind, dass sie eine oder mehrere konzentrische ringförmige Reihen (17, 18) bilden, umfassen.

5. System nach Anspruch 4, wobei jedes Modul mit benachbarten Modulen durch radiale Verbindungen (23) und Umfangsverbindungen (23a) verbunden ist, wobei die radialen Verbindungen und die Umfangsverbindungen so konfiguriert sind, dass sie eine begrenzte Verschiebung zwischen den verbundenen Modulen ermöglichen.

6. System nach einem der vorhergehenden Ansprüche, wobei die Verbindungen zwischen den Korbmodulen Segmente (24) mit einem insgesamt C-förmigen oder U-förmigen Querschnitt umfassen, wobei die Segmente nach unten gerichtet über Seitenwände zweier benachbarter Korbmodule angeordnet sind, so dass das Segment die Randwände der Module umschließt, wobei das Segment durch Stifte (36) in Position gehalten ist, welche Stifte (36) durch Löcher in den Seitenwänden eingeführt sind.

7. System nach einem der vorherigen Ansprüche, weiterhin umfassend eine Dichtungswand (11), die so angeordnet ist, dass sie eine Seitenfläche zwischen dem ersten Stützring (8) und dem zweiten Stützring (10) gasdicht abdichtet.

8. System nach einem der vorherigen Ansprüche, wobei:
die tragende Struktur (3) eine Außenwand (4), eine Innenwand (5) und eine obere Verbindungsstelle (7) umfasst, welche obere Verbindungsstelle (7) zwischen der Außenwand (4) und der Innenwand (5) verschweißt ist;
und wobei der erste Stützring (8) mit der Innenwand (5) verschweißt ist.

9. System nach den Ansprüchen 7 und 8, wobei die Dichtungswand (11) mit dem ersten Stützring (8) und dem zweiten Stützring (10) verschweißt ist.

10. System nach Anspruch 8 oder 9, wobei die obere Verbindungsstelle (7) ein gekrümmtes Profil aufweist und die Außenwand (4) und die Innenwand (5) parallel sind, so dass die tragende Struktur (3) als radial elastische Stütze wirkt.

11. System (1) nach einem der Ansprüche 8 bis 10, umfassend einen Satz Kühlrohre (25), die zwischen der Außenwand (4) und der Innenwand (5) angeordnet sind.

12. System (1) nach einem der vorhergehenden Ansprüche, wobei die Katalysator-Gitter (9) mittels eines Gegengewichts oder mittels mehrerer Gegengewichte (27) über dem ersten Stützring (8) in Position gehalten wird.

13. Ammoniakoxidationsbrenner mit einem Katalysator-Gitter (9) zur Oxidation von Ammoniak und einem Trägersystem für das Katalysator-Gitternach einem der vorhergehenden Ansprüche.

## Revendications

1. Système de support de catalyseur (1) pour un brûleur d'oxydation d'ammoniac (2), comportant :
une structure porteuse (3) comportant une première bague de support (8) pour supporter une gaze catalytique (9) pour l'oxydation d'ammoniac et une deuxième bague de support (10) située sous ladite première bague selon une direction verticale ;
un panier (14) qui est raccordé à ladite deuxième bague de support (10) et est adapté pour contenir un inerte et/ou un catalyseur pour éliminer du N2O contenu dans un effluent gazeux de ladite gaze catalytique (9) ;
dans lequel ledit panier (14) présente une structure modulaire incluant une pluralité de modules, dans lequel chaque module inclut un plancher perméable aux gaz (16) et un cadre de support (15), dans lequel chaque module est raccordé à des modules adjacents par des raccordements adaptés pour permettre un déplacement limité entre modules afin de répartir un allongement thermique entre modules, dans lequel seuls des modules externes (21a) formant la périphérie du panier sont raccordés à ladite bague de support.

2. Système selon la revendication 1, dans lequel chacun des modules externes (21a) du panier est raccordé à ladite deuxième bague (10) par un joint radial (22), ledit joint radial étant configuré pour empêcher un déplacement radial du module par rapport à ladite bague (10) et pour permettre un déplacement limité du module dans une direction verticale et de préférence également une rotation.

3. Système selon la revendication 1 ou 2 incluant un ensemble de tubes de refroidissement situés sous le panier, dans lequel lesdits modules du panier reposent sur lesdits tubes de refroidissement et les seuls moyens de support du panier sont les tubes de refroidissement et les joints radiaux entre les modules externes du panier et ladite deuxième bague (10).

4. Système selon l'une quelconque des revendications précédentes, dans lequel lesdits modules incluent un module interne (20) situé au centre du panier et des modules (21, 21a) agencés pour former une ou plusieurs rangées annulaires concentriques (17, 18).

5. Système selon la revendication 4, dans lequel chaque module est raccordé à des modules adjacents par des joints radiaux (23) et des joints circonférentiels (23a), dans lequel lesdits joints radiaux et lesdits joints circonférentiels sont configurés pour permettre un déplacement limité entre les modules raccordés.

6. Système selon l'une quelconque des revendications précédentes dans lequel les raccordements entre les modules de panier incluent des segments (24) avec une section transversale globale en forme de C ou en forme de U, lesdits segments étant disposés orientés vers le bas sur des parois latérales de deux modules de panier adjacents, de sorte que le segment enveloppe les parois de bord des modules, le segment étant maintenu en position par des goupilles (36) insérées à travers des trous desdites parois latérales.

7. Système selon l'une quelconque des revendications précédentes, incluant une paroi d'étanchéité (11) agencée pour sceller de manière étanche au gaz une surface latérale entre la première bague de support (8) et la deuxième bague de support (10).

8. Système selon l'une des revendications précédentes, dans lequel :
ladite structure porteuse (3) inclut une paroi externe (4), une paroi interne (5), une jonction supérieure (7) soudée entre ladite paroi externe (4) et ladite paroi interne (5) ;
ladite première bague de support (8) est soudée à ladite paroi interne (5).

9. Système selon les revendications 7 et 8, dans lequel ladite paroi d'étanchéité (11) est soudée à la première bague de support (8) et à la deuxième bague de support (10).

10. Système selon la revendication 8 ou 9 dans lequel ladite jonction supérieure (7) présente un profil incurvé et la paroi externe (4) et la paroi interne (5) sont parallèles, de sorte que la structure porteuse (3) agit comme un support radialement élastique.

11. Système (1) selon l'une quelconque des revendications 8 à 10 comportant un ensemble de tubes de refroidissement (25) qui sont agencés entre ladite paroi externe (4) et ladite paroi interne (5).

12. Système (1) selon l'une quelconque des revendications précédentes, dans lequel ladite gaze catalytique (9) est maintenue en place sur ladite première bague de support (8) au moyen d'un ou plusieurs contrepoids (27).

13. Brûleur d'oxydation d'ammoniac incluant une gaze catalytique (9) pour l'oxydation d'ammoniac et un système de support pour ladite gaze catalytique selon l'une quelconque des revendications précédentes.
